(19) **Europäisches Patentamt**
**European Patent Office**
**Office européen des brevets**

(11) **EP 4 622 288 A1**

(12) **EUROPEAN PATENT APPLICATION**
published in accordance with Art. 153(4) EPC

(43) Date of publication:
**24.09.2025 Bulletin 2025/39**

(21) Application number: **24750470.7**

(22) Date of filing: **19.01.2024**

(51) International Patent Classification (IPC):
*H04N 25/68* (2023.01)        *H04N 25/11* (2023.01)
*H04N 23/54* (2023.01)        *H04N 25/683* (2023.01)

(52) Cooperative Patent Classification (CPC):
**H04N 23/54; H04N 25/11; H04N 25/68;**
**H04N 25/683**

(86) International application number:
**PCT/KR2024/000993**

(87) International publication number:
**WO 2024/162668 (08.08.2024 Gazette 2024/32)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **31.01.2023 KR 20230013264**
**18.04.2023 KR 20230050799**

(71) Applicant: **Samsung Electronics Co., Ltd.**
**Suwon-si, Gyeonggi-do 16677 (KR)**

(72) Inventors:
• **LIM, Sungjun**
**Suwon-si, Gyeonggi-do 16677 (KR)**
• **KIM, Dongo**
**Suwon-si, Gyeonggi-do 16677 (KR)**

• **KIM, Changho**
**Suwon-si, Gyeonggi-do 16677 (KR)**
• **PARK, Jaehyoung**
**Suwon-si, Gyeonggi-do 16677 (KR)**
• **HA, Seungtae**
**Suwon-si, Gyeonggi-do 16677 (KR)**
• **KANG, Wonseok**
**Suwon-si, Gyeonggi-do 16677 (KR)**
• **LEE, Sungmin**
**Suwon-si, Gyeonggi-do 16677 (KR)**
• **CHOE, Jeongin**
**Suwon-si, Gyeonggi-do 16677 (KR)**
• **HONG, Juneui**
**Suwon-si, Gyeonggi-do 16677 (KR)**

(74) Representative: **Appleyard Lees IP LLP**
**15 Clare Road**
**Halifax HX1 2HY (GB)**

(54) **CAMERA MODULE, METHOD FOR CORRECTING IMAGES BY CAMERA MODULE, AND ELECTRONIC DEVICE COMPRISING CAMERA MODULE**

(57)     A camera module according to various embodiments of the present document may comprise an image sensor comprising multiple pixels, and a processor operatively connected to the image sensor. Multiple pixels of the image sensor may constitute multiple pixel groups comprising multiple pixels for sensing light in the same wavelength band. The processor may be configured to: receive a raw image comprising pixel data corresponding to the intensity of light sensed by each of the multiple pixels from the image sensor; identify a bad pixel group comprising at least one bad pixel among multiple sub-pixel groups belonging to the pixel group sin the received raw image; correct pixel data of each pixel belonging to the bad pixel group in the raw image on the basis of pixel data of at least one pixel positioned on the periphery, thereby generating a primary corrected image; and correct pixel data of each pixel belonging to a candidate pixel group which is one of multiple sub-pixel groups adjacent to the bad pixel group in the primary corrected image on the basis of pixel data of at least one pixel positioned on the periphery, thereby generating a secondary corrected image. Various other embodiments are also possible.

EP 4 622 288 A1

FIG. 5

| R | G | B | BP | GP |

**Description**

[Technical Field]

The disclosure relates to a camera module and a method of correcting acquired images by an electronic device including the camera module.

[Background Art]

Electronic devices such as smartphones may provide various user experiences by using improved hardware/software technology. The electronic device may include a camera for providing various user experiences. An image sensor of the camera may include a plurality of pixels and may include a high-pixel image sensor to provide improved quality of camera photographing.

During a procedure of processing a camera and/or a procedure of using a camera by a user, some pixel may have defects, which may be referred to as bad pixels. For example, bad pixels may include hot pixels that output pixel data close to the maximum value, dead pixels that output pixel data close to 0, and stuck pixels in which some of the lower pixels consistently output a value greater or less than the actual value, regardless of the amount of incident light. The electronic device may correct pixel data of bad pixels of a raw image acquired by the image sensor through various bad pixel correction (BPC) algorithms.

[Disclosure of Invention]

[Technical Problem]

Competitiveness in size and weight of electronic devices is becoming important, so it is necessary to minimize the size even if a high-pixel camera is configured. Accordingly, the image sensor is being developed to reduce the size of pixels of the image sensor, and for this purpose, which may have the effect of substantially increasing the pixel size by using binning between adjacent pixels.

In the case of such a multi-pixel sensor, errors in pixel data may occur in at least some of the other pixels adjacent to bad pixel (for example, ghost pixels) due to wiring problems in the circuit during the development process. When the pixels are processed and corrected as bad pixels, the size of a bad pixel area may increase and distortion of image information may occur.

[Solution to Problem]

A camera module according to the disclosure (specification or invention) may include an image sensor including a plurality of pixels and a processor operatively connected to the image sensor, and the plurality of pixels of the image sensor may include a plurality of pixel groups including a plurality of pixels for detecting light of an identical wavelength band.

According to various embodiments, the processor may be configured to receive a raw image including pixel data corresponding to strength of light detected in each of the plurality of pixels from the image sensor, identify a bad pixel group including at least one bad pixel among a plurality of sub-pixel groups belonging to the pixel group in the received raw image, generate a primary corrected image by correcting pixel data of respective pixels belonging to the bad pixel group in the raw image, based on pixel data of at least one neighboring pixel, and generate a secondary corrected image by correcting pixel data of respective pixels belonging to one candidate pixel group among a plurality of sub-pixel groups adjacent to the bad pixel group in the primary corrected image, based on pixel data of at least one neighboring pixel.

[Advantageous Effects of Invention]

According to various embodiments of the disclosure, a camera module capable of correcting pixel data of bad pixels and ghost pixels adjacent to the bad pixels generated in the image sensor to be close to real image data, a method of correcting an image by the camera module, and an electronic device including the camera module may be provided.

[Brief Description of Drawings]

FIG. 1 is a block diagram of an electronic device within a network environment according to various embodiments.

FIG. 2 is a block diagram of a camera module according to various embodiments.

FIG. 3 is a block diagram of an electronic device according to various embodiments.

FIG. 4 illustrates examples of a pixel structure of an image sensor.

FIG. 5 illustrates an image correction process of the camera module according to various embodiments.

FIGS. 6A and 6B illustrate a method of detecting a bad pixel group according to various embodiments.

FIG. 7 illustrates a process of sequentially correcting a bad pixel group and a candidate pixel group of the image according to various embodiments.

FIG. 8 illustrates an input image input to a deep learning model and a GT image according to various embodiments.

FIG. 9 illustrates a processed raw image and a corrected image according to various embodiments.

FIG. 10 illustrates examples of a corrected image in the case where a raw image is corrected according to the prior art and the case of correction according to various embodiments of the disclosure.


[Mode for the Invention]

Hereinafter, embodiments of the disclosure are described in detail with reference to the drawings to be easily implemented by those skilled in the art to which the disclosure belongs. However, the disclosure may be implemented in various different forms and is not limited to embodiments described herein. With respect to the description of drawings, the same or similar reference numerals may be used for identical or similar components. In addition, in the drawings and relevant description, descriptions of well-known functions and configurations may be omitted for clarity and brevity.

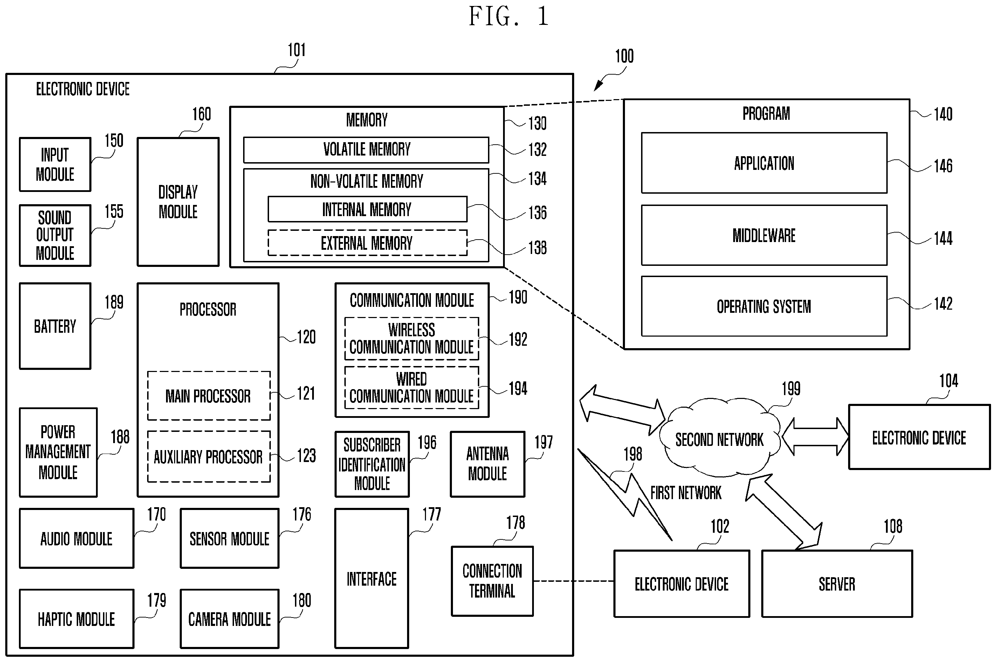

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input 1module 150, a sound output 1module 155, a display 1module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the 11connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160). 11

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display 1module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised leaming, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input 1module 150 may receive a command or data to be used by another component (e.g., the processor 120) of the electronic device 101, from the outside (e.g., a user) of the electronic device 101. The input 1module 150 may include, for example, a microphone, a mouse, a keyboard, a key (e.g., a button), or a digital pen (e.g., a stylus pen).

The sound output 1module 155 may output sound signals to the outside of the electronic device 101. The sound output 1module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display 1module 160 may visually provide information to the outside (e.g., a user) of the electronic device 101. The display 1module 160 may include, for example, a display, a hologram device, or a projector and control circuitry to control a corresponding one of the display, hologram device, and projector. According to an embodiment, the display 1module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input 1module 150, or output the sound via the sound output 1module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultrareliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an interperipheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

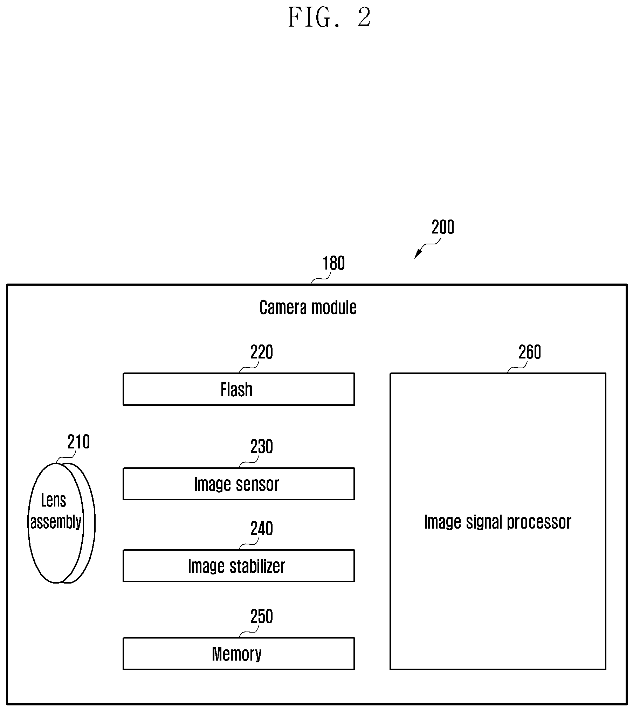

Fig. 2 is a block diagram 200 illustrating the camera module 180 according to various embodiments. Referring to Fig. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display device 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display device 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display device 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules180 may form a telephoto camera. Similarly, at least one of the plurality of camera modules 180 may form, for example, a front camera and at least another of the plurality of camera modules180 may form a rear camera.

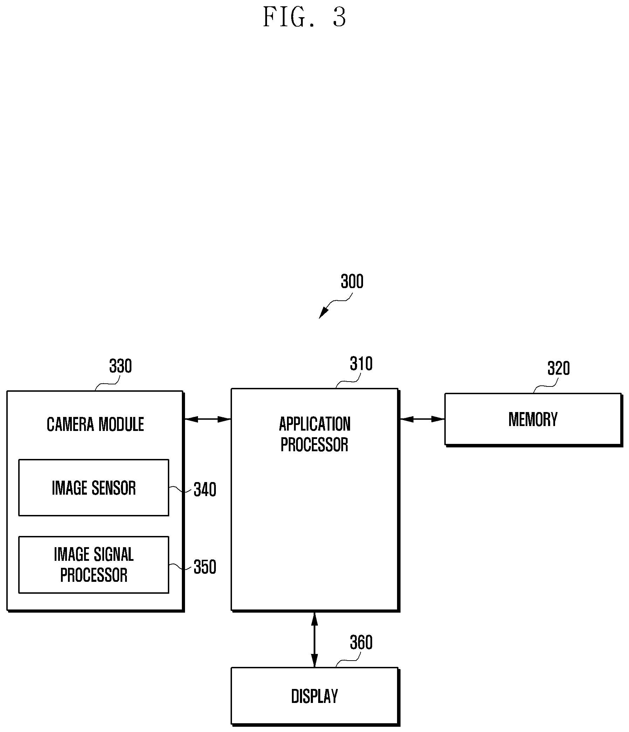

FIG. 3 is a block diagram illustrating an electronic device according to various embodiments.

Referring to FIG. 3, an electronic device 300 according to various embodiments may include a camera module 330, a display 360, an application processor 310, and a memory 320, and various embodiments of the disclosure may be implemented even though some of the illustrated elements are omitted or related with other elements. The electronic device 300 may further include at least one some of the elements and/or functions of the electronic device 101 in FIG. 1 as well as the illustrated elements. At least some of the elements of the electronic device 300 which are (or are not) illustrated may be operatively, functionally, and/or electrically connected to each other.

According to various embodiments, the camera module 330 may include an image sensor 340 and an image signal processor 350. The camera module 330 may further include at least some of the elements and/or functions of the camera module 180 of FIG. 2 such as the lens assembly 210, the flash 220, and the image stabilizer 240.

According to various embodiments, the image sensor 340 may convert light emitted or reflected and transferred from the subject into electrical signals, and acquire an image corresponding to the subject. The image sensor 340 may be configured as a charged coupled device (CCD) sensor or a complementary metal oxide semiconductor (CMOS) sensor but is not limited thereto. The image sensor 340 may further include at least some of the elements and/or functions of the image sensor 230 in FIG. 2.

According to various embodiments, the image sensor 340 may include a plurality of pixels. For example, the image sensor 340 may include R sub-pixels that detect light of a red (R) band, G sub-pixels that detect light of a green (G) band, and B sub-pixels that detect light of a blue (B) band, and at least one R sub-pixel, G sub-pixel, and B sub-pixel may constitute one pixel. In the document, each sub-pixel may be referred to as a pixel.

According to various embodiments, the image sensor 340 may include a color filter array that allows light of a predetermined wavelength band pass therethrough for each of a plurality of pixels. For example, the color filter array may include a plurality of color filter elements that allow light of the R band, G band, and B band to pass therethrough. According to an embodiment, one color filter element may correspond to one pixel or correspond to a plurality of pixels (for example, a plurality of pixels in a pixel group).

According to an embodiment, the image sensor 340 may include a micro lens array including a plurality of micro lenses capable of imaging incident light on a specific pixel. One pixel or a plurality of pixels (for example, a plurality of pixels in a sub-pixel group) may be disposed under the micro lens.

According to an embodiment, pixels of the image sensor 340 may be configured in a Bayer pattern. For example, the Bayer pattern may have the form in which R, G, G, and B pixels constitute a 2*2 matrix. In the Bayer pattern, color filter elements that allow light of each wavelength to pass therethrough may be disposed on each of the R, G, G, and B pixels.

According to an embodiment, the pixels of the image sensor 340 may be configured in a multi-pixel pattern that provides binning of a plurality of pixels. The multi-pixel pattern has the form in which a plurality of R, G, and B pixels are adjacent to each other to configure a matrix unlike the Bayer pattern, and may include a tetra pattern or a hexadeca pattern as an example. When the image sensor 340 is configured in the multi-pixel pattern, one color filter element may cover a plurality of R, G, or B pixels.

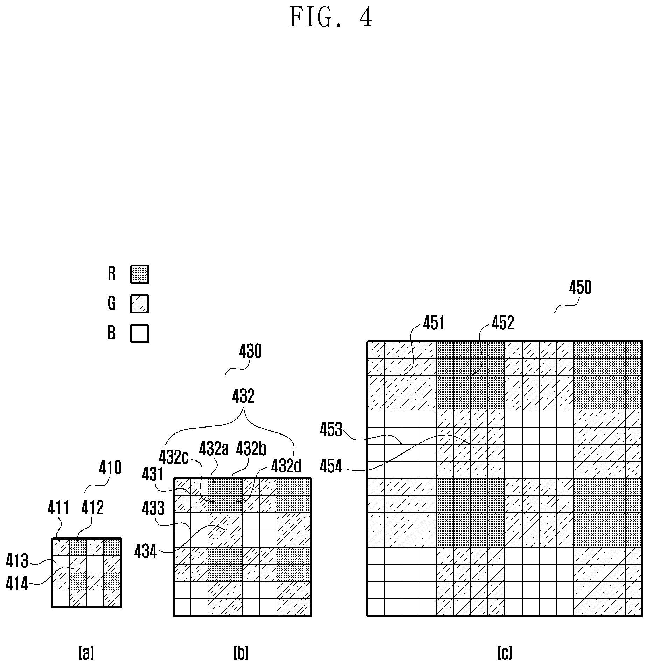

An example of the pixels of the image sensor 340 is illustrated in more detail through FIG. 4.

In the disclosure, when the image sensor 340 is configured in the multi-pixel pattern, pixels adjacent to each other that are disposed under one color filter element and detect light of the same wavelength band (for example, red band, green band, or blue band) may be referred to as a pixel group. Further, one pixel group may be divided into sub-pixel groups including a plurality of pixels adjacent to each other. For example, a pixel group may include n*n pixels, and a sub-pixel group may include n/2 * n/2 pixels but the number of pixels in the sub-pixel group is not limited thereto.

According to an embodiment, a bad pixel may be generated among the pixels of the image sensor 340. For example, bad pixels may include hot pixels that output pixel data close to the maximum value, dead pixels that output pixel data close to 0, and stuck pixels in which some of the lower pixels consistently output a value greater or less than the actual value, regardless of the amount of incident light. After capturing a test image, the electronic device 300 (or the camera module 330) may detect the bad pixel, based on difference between pixel data of each pixel in the raw image acquired by the image sensor 340 and actual data of the test image.

According to various embodiments, the image signal processor 350 may perform image processing for the image acquired through the image sensor 340. The image processing performed by the image signal processor 350 may include, for example, depth map generation, three-dimensional modeling, panorama generation, feature point extraction, image synthesis, or image correction (for example, noise reduction, resolution adjustment, brightness adjustment, blurring, sharpening, or softening), and the control (for example, exposure time control or read out timing control) for at least one of the elements (for example, the image sensor 340) included in the camera module 340 but is not limited thereto. The image signal processor 350 may further include at least some of the elements and/or functions of the image signal processor 260 of FIG. 2. According to an embodiment, unlike disclosed in FIG. 3, the image signal processor 350 is not included in the camera module 330 but may be configured as hardware separated from the camera module 330 and connected to each element of the camera module 330. Alternatively, at least some of the functions of the image signal processor 350 may be performed by the application processor 310.

According to an embodiment, the electronic device 300 may include a plurality of camera modules 330. For example, the electronic device 300 may include the camera module in each of the front surface including the display 360 and the rear surface opposite thereto. When the electronic device 300 includes a plurality of camera modules 330, each of the camera modules 330 may include the image sensor 340 and the image signal processor 350 or one image signal processor 350 may process images acquired by the plurality of camera modules 330.

According to various embodiments, the display 360 may be implemented as one of a liquid crystal display (LCD), a light-emitting diode (LED) display, or an organic light-emitting diode (OLED) display, but is not limited thereto. The display 360 may be configured as a touch screen which detects a touch and/or a proximity touch (or hovering) input using a user's body part (for example, a finger) or an input device (for example, a stylus pen). The display 360 may include at least some of the elements and/or functions of the display module 160 of FIG. 1. At least a portion of the display 360 may be flexible, and the display 360 may be implemented as a foldable display or a rollable display.

According to various embodiments, the memory 320 may include a volatile memory and a non-volatile memory and may temporarily or permanently store various pieces of data. The memory 320 may include at least some of the elements and/or functions of the memory 130 of FIG. 1 and may store the program 140 of FIG. 1.

According to various embodiments, the memory 320 may store various instructions that can be executed by the application processor 310. The instructions may include control commands such as arithmetic and logical operations, data movement, and input/output that may be recognized by the application processor 310.

According to various embodiments, the application processor 310 is an element capable of controlling each component of the electronic device 300 and/or processing operations or data related to communication, and may be configured with one or more processors. The application processor 310 may include at least some of the configurations and/or functions of the processor 120 of FIG. 1.

Hereinafter, various embodiments in which the camera module 330 (or the image signal processor 350) detects a bad pixels in a raw image acquired through the image sensor 340 and a bad pixel group including at least one bad pixel and sequentially corrects pixel data of a bad pixel group and a candidate pixel group adjacent thereto (or a ghost pixel group) are described. The operation of the image signal processor 350 described below may be performed through loading of the instructions stored in the memory (for example, the memory 250 of FIG. 2) of the camera module 330. For example, the description in which the image processor 350 can perform any operation may be equally construed as the description in which the instructions causing the camera module 330 to perform the corresponding operation is stored in the memory of the camera module 330. At least some of the instructions may be stored in the memory 320 of the electronic device 300. In the disclosure, although it is described that the operation of correcting the pixel data of the raw image to generate corrected images (for example, a primary corrected image and a secondary corrected image) is performed by the image signal processor 350 included in the camera module 330, at least some of the operations may be performed by the application processor 310. In this case, the operation performed by the application processor 310 may be performed through loading of instructions stored in the memory 320.

According to various embodiments, the image signal processor 350 may receive a raw image including pixel data corresponding to the strength of light detected by each of a plurality of pixels from the image sensor 340.

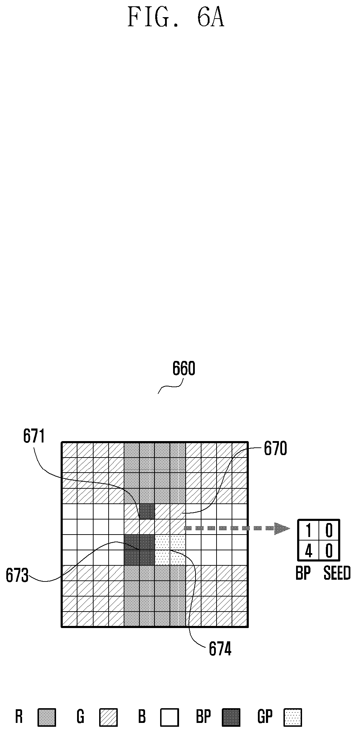

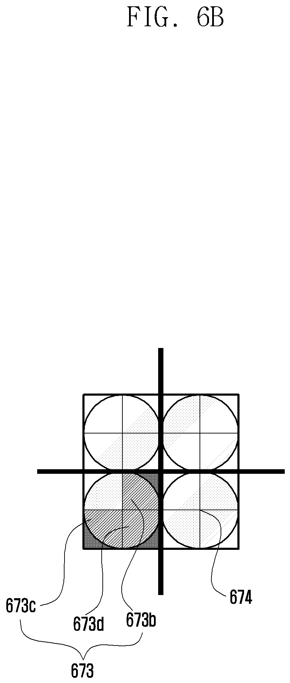

According to various embodiments, the image signal processor 350 may identify a bad pixel group in the received raw image. For example, the electronic device 300 may identify in advance bad pixels among the plurality of pixels of the image sensor 340 through capturing of the text image and analysis of the pixel data during a processing process. When 4*4 pixels are disposed below one color filter element and configured as one pixel group in the image sensor 340, the corresponding pixel group may include 4 sub-pixel groups, each of which includes 2*2 pixels. According to an embodiment, the image signal processor 350 may determine that a sub-pixel group including bad pixels larger than or equal to a predetermined number (for example, 3) among the respective sub-pixel groups is a bad pixel group. The method by which the electronic device 300 (or camera module 330) determines the bad pixel group among sub-pixel groups will be described in more detail through FIGS. 6A and 6B.

According to an embodiment, among pixels adjacent to the bad pixel of the image sensor 340, a ghost pixel may be generated. The image sensor 340 may include a multi-pixel pattern structure (or N*N pattern structure) in which a plurality of pixels are disposed below one color filter element like a tetra pattern (or 2*2 pattern), a nano pattern (or 3*3 pattern), or a hexadeca pattern (or 4*4 pattern). During a process of developing the image sensor 340 in the multi-pixel structure, the ghost pixel may be generated in a specific direction of the bad pixel due to wiring problems in the circuit. For example, a pixel in a predetermined direction from the bad pixel may be the ghost pixel, and an adjacent pixel in a direction opposite to the bad pixel from a driving circuit, that is, an input direction of a pixel driving signal, may be the ghost pixel.

According to various embodiments, the image signal processor 350 may determine that any one of sub-pixel groups adjacent to the bad pixel group in the raw image is a candidate pixel group. The candidate pixel group may be defined as a sub-pixel group that is likely to include the ghost pixel. The image signal processor 350 may determine that an adjacent sub-pixel group in the direction opposite to the pixel driving signal from the bad pixel group is the candidate pixel group.

According to various embodiments, the image signal processor 350 may generate a secondary corrected image through a primary correction for the raw image and a secondary correction for the primary corrected image to correct pixel data of the bad pixel (or bad pixel group) and the ghost pixel (or candidate pixel group) of the raw image.

According to various embodiments, the image signal processor 350 may generate a primary corrected image by primarily correcting pixel data of each pixel belonging to the bad pixel group in the raw image, based on pixel data of at least one pixel located therearound. As the method by which the image signal processor 350 corrects the pixel data, at least one of various bad pixel correction (BPC) algorithms may be used.

According to an embodiment, the image signal processor 350 may correct pixel data, based on pixel data of a plurality of pixels located around a specific pixel of the bad pixel group. For example, the image signal processor 350 may identify pixel data of pixels in a contrast edge direction of pixels around a specific pixel, that is, pixels of the same wavelength as the corresponding pixel (for example, R pixel, G pixel, and B pixel) among neighboring multiple pixels, and correct pixel data of the corresponding pixel by obtaining an average value (or intermediate value) of the identified pixel data. According to an embodiment, the image signal processor 350 may assign a weight to pixel data of each neighboring pixel according to a distance from the specific pixel. For example, among the neighboring pixels of the specific pixel, a higher weight is assigned in the order of the adjacent pixel, so that the impact on correction may be great.

According to an embodiment, in the primary correction, the image signal processor 350 may correct only pixel data of pixels in the bad pixel group and may not correct pixel data of pixels in the candidate pixel group. Further, in the primary correction, when pixel data of a specific pixel in the bad pixel group is corrected, pixel data of a specific pixel in the candidate pixel group may be used.

According to various embodiments, the image signal processor 350 may generate a secondary corrected image by correcting pixel data of each pixel belonging to the candidate pixel group in the primary corrected image, based on pixel data of at least one pixel located therearound. Since the pixel data of the bad pixel group has been corrected in the primary corrected image, pixel data of the bad pixel group corrected during the primary correction for pixel data of the candidate pixel group may be referenced for the secondary correction.

According to an embodiment, the image signal processor 350 may perform correction, based on pixel data of a plurality of pixels located around a specific pixel of the candidate pixel group, but may assign a weight to pixel data of each pixel according to a distance from the specific pixel. For example, in the secondary correction, the method of correcting specific pixel data may be the same as that of the secondary correction.

According to an embodiment, the image signal processor 350 may identify whether corrected data that has been corrected by the secondary correction for the specific pixel of the candidate pixel group is within a predetermined range. For example, the predetermined range may be a range of values lower than the less significant bit (LSB) of pixel data of the raw image of the specific pixel and greater than the difference between the LSB of the pixel data of the corresponding pixel and a value obtained by multiplying a sensor gain by a predetermined multiple. More specifically, the predetermined range may be expressed as [Equation 1].

$$[\text{Equation } 1]$$
$$GPlsb - (sensorGain * 3) < corrected\ data < GPlsb$$

In [Equation 1], GPlsb is lsb of the corresponding pixel. In [Equation 1], three times the sensor gain are considered, but the disclosure is not limited thereto.

According to an embodiment, when the calculated corrected data is within the predetermined range, the image signal processor 350 may generate the secondary corrected image by using the corrected data. Alternatively, when the calculated corrected data is not within the predetermined range, the image signal processor 350 may generate the secondary corrected image by directly using the pixel data of the raw image. In this case, whether the corrected data is within the predetermined range may be determined for each pixel in the candidate pixel group, and when only corrected data of some pixels is within the predetermined range and corrected data of the remaining pixels is not within the predetermined range, based on the calculation result, the secondary corrected image may be generated using only the corrected data of the pixels within the predetermined range. Accordingly, even when the candidate pixel group corresponds to an edge area of the image, it is possible to clearly process the edge area while preserving data of the edge area by accurately reflecting image information.

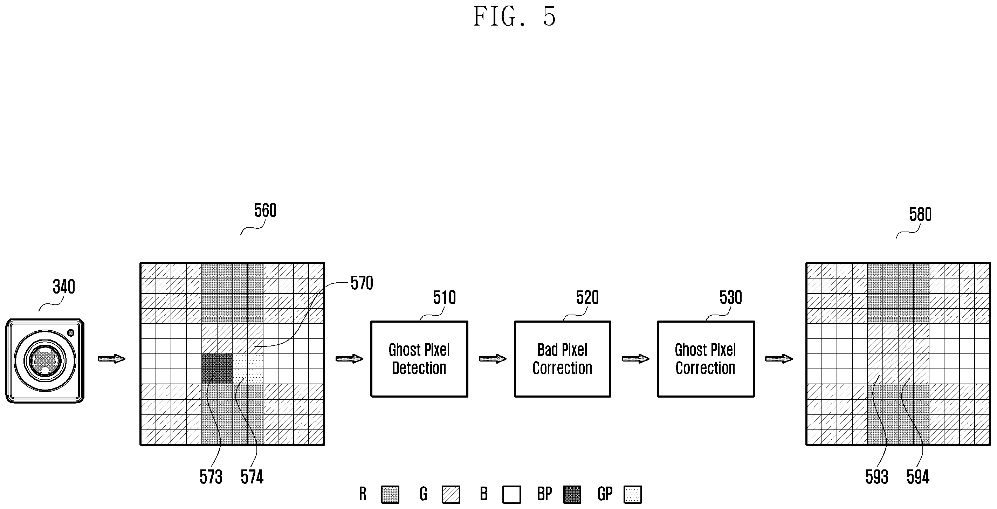

The process in which the image signal processor 350 (or application processor 310) corrects the bad pixel and the ghost pixel will be illustrated in more detail through FIG. 5.

According to various embodiments, the image signal processor 350 may provide the generated secondary corrected image to the application processor 310. The application processor 310 may process the received secondary corrected image and display the same on the display 360 in real time as a preview image and/or store the same in the memory 320.

According to various embodiments, during a process of detecting the bad pixel of the input image and processing pixel data through deep learning, information on the bad pixel group and the ghost pixel group may be included in the input image. In the conventional case, when the BPC is processed through deep learning, the bad pixel was included in the input image and the learning was performed. According to various embodiments of the disclosure, when the BPC is processed through deep learning, the information on the bad pixel and the ghost pixel may be input as learning data. For example, an input image including pixel data of the bad pixel and pixel data of the ghost pixel and a ground truth (GT) image including real image information including no bad pixel and no ghost pixel may be input into a deep learning model 830, and the deep learning model may detect the bad pixel and the ghost pixel and learn the correction operation of the pixel data of the bad pixel and the ghost pixel by comparing the pixel data of respective pixels of the input image and the GT image.

Instructions performing the operation of the image signal processor 350 or the application processor 310 may be stored in a computer-readable recording medium. The recording medium may be tangible and non-transitory. The recording medium may store one or more computer programs including the instructions.

FIG. 4 illustrates examples of a pixel structure of the image sensor.

The camera module 330 (or electronic device 300) according to various embodiments of the disclosure may include the image sensor 340 having a pixel structure as illustrated in part (a), (b), (c) of FIG. 4 but is not limited thereto.

Part (a) of FIG. 4 illustrates an image sensor in a Bayer pattern structure 410. Referring to part (a) of FIG. 4, in the image sensor having the Bayer pattern structure 410, a G pixel 411 and a R pixel 412 (or sub-pixel) may be alteernately disposed in one column of the pixel matrix and a B pixel 413 and a G pixel 414 may be alternately disposed in another column. In such a structure, a 2*2 matrix including the G, R, B, and G pixels 411, 412, 413, and 414 may be constituted by data of one pixel in image data. In the Bayer pattern structure 410, a color filter element that allows light of each wavelength to pass therethrough may be disposed on each of the R, G, G, and B pixels 411, 412, 413, and 414.

According to various embodiments, the camera module 330 of the electronic device 300 may include a multi-pixel image sensor. According to a multi-pixel structure, the size of the color filter may be varied in order to implement the camera module 330 to be high definition. In the case of an electronic device requiring portability, competitiveness in size and weight is important, so even if the number of pixels is increased, the size of the image sensor 340 may need to be minimized, and accordingly, it may be developed in a direct of reducing the size of each pixel. In such development, an effect of actually increasing the pixel size and an amount of received light may be obtained by providing binning between pixels, thus and a high-resolution and high-sensitivity sensor may be implemented. For example, the image sensor 340 of the camera module 330 may be configured in a tetra pattern 430 including 2*2 pixels, a nano pattern (not shown) including a 3*3 pattern (not shown), or a hexadeca pattern 450. The tetra pattern 430 may be referred to as a 2*2 pattern, the nano pattern may be referred to as a 3*3 pattern, and the hexadeca pattern may be referred to as 4*4 patternm.

Part (b) of FIG. 4 illustrates an image sensor in the tetra pattern structure 430. Referring to part (b) of FIG. 4, in the image sensor having the tetra pattern structure 430, 2 G pixels and 2 R pixels may be alternately disposed in one column and 2 B pixels and 2 G pixels may be alternately disposed in another column in the pixel matrix. In the tetra pattern structure 430, one color filter element that allows light of the R band to pass therethrough may cover a pixel group 432 including adjacent 2*2 R pixels 432a, 432b, 432c, and 432d. Further, one color filter element that allows light of the G band to pass therethrough may cover pixel groups 431 and 434 including 2*2 G pixels, and one color filter element that allows light of the B band to pass therethrough may cover a pixel group 433 including 2*2 B pixels.

Part (c) of FIG. 4 illustrates an image sensor in the hexadeca pattern structure 450. Referring to part (c) of FIG. 4, in the image sensor having the hexadeca pattern structure 450, 4 G pixels and 4 R pixels may be alternately disposed in one column and 4 B pixels and 4 G pixels may be alternately disposed in another column in the pixel matrix. In the hexadeca pattern structure 450, one color filter element that allows light of the R band to pass through may cover a pixel group 452 including adjacent 4*4 R pixels, one color filter element that allows light of the R band to pass through may cover pixel groups 451 and 454 including 4*4 G pixels, and one color filter element that allows light of the B band to pass through may cover a pixel group 453 including adjacent 4*4 B pixels.

Binning may be performed for pixel data of adjacent 2*2 R pixels (G pixel or B pixels) in the tetra pattern structure 430 of part (b) of FIG. 4, and binning may be performed for pixel data of adjacent 4*4 R pixels (G pixels or B pixels) in the hexadeca pattern structure 450 of part (c) of FIG. 4. Accordingly, in comparison with the image sensor in the Bayer pattern structure 410, it is possible to implement the image to be more sensitivity than the multi-pixel image sensor.

However, in the case of the multi-pixel image sensor, as the number of pixels included in the image sensor increases compared to the limited size of the image sensor, the number of bad pixels may further increase. Further, a ghost pixel may be generated in a specific direction (for example, light side) of the bad pixel due to wiring problems in the circuit during a process of processing the sensor. In the case of the ghost pixel, pixel data may be detected high compared to the size of actually detected light.

The camera module 330 (or electronic device 300) according to various embodiments of the disclosure may correct pixel data of the bad pixel and ghost pixel generated in the multi-pixel image sensor such as the tetra pattern structure 430 or the hexa pattern structure 450 to correspond to real image information through the primary correction and secondary correction processes. According to an embodiment, the camera module 330 (or electronic device 300) may include the image sensor in the Bayer pattern structure 410.

FIG. 5 illustrates an image correction process of the camera module according to various embodiments.

According to various embodiments, the camera module 330 (or electronic device 300) may acquire a raw image 560 including pixel data corresponding to the strength of light detected in each of a plurality of pixels through the image sensor 340. The image sensor 340 may be configured in one of the Bayer pattern 410, the tetra pattern 430, or the hexadeca pattern 450 in FIG. 4. In the disclosure, the tetra pattern 430 may be defined as a structure in which 2*2 pixels are disposed below one color filter of the same channel (for example, R channel, G channel, or B channel), and the hexadeca pattern 450 may be defined as a structure in which 4*4 pixels are disposed below one color filter of the same channel. The following description is made based on the image sensor in the hexadeca pattern 450 of part (c) of FIG. 4, but is not limited thereto, and various embodiments of the disclosure may be applied to an image sensor in a structure in which N*N pixels (N being a natural number) pixels are disposed below one color filter of the same channel.

The image sensor 340 may include a pixel group including a plurality of pixels adjacent to each other that detect light of the same wavelength band. Referring to FIG. 5, 4*4 G pixels may constitute one pixel group 570 in a raw image 560, and the 4*4 pixel group may include 4 sub-pixel groups, each of which includes 2*2 G pixels. The image sensor 340 may output the raw image 560 in a nonremosaic state.

According to an embodiment, at least one of the sub-pixel groups included in the pixel group may be bad pixel groups including at least one bad pixel. Referring to FIG. 5, in the G pixel group 570, the lower left sub-pixel group may be a bad pixel group 573.

According to various embodiments, the camera module 330 (or image signal processor 350) may perform a ghost pixel detection operation 510. According to an embodiment, the camera module 330 may determine that a sub-pixel group including bad pixels larger than or equal to a predetermined number (for example, 3) among the respective sub-pixel groups is the bad pixel group. For example, 3 bad pixels are detected in the lower left sub-pixel group of the G pixel group 570 in FIG. 5, and thus the lower left sub-pixel may be determined as the bad pixel group 573.

According to an embodiment, the camera module 330 may detect the bad pixel group 573 in the ghost pixel detection operation 510 and determine an adjacent sub-pixel group in a predetermine direction (for example, on the right side) of the bad pixel group 573 as a candidate pixel group 574.

According to an embodiment, among pixels adjacent to the bad pixel of the image sensor 340, a ghost pixel may be generated. In the process of the image sensor 340 in the multi-pixel pattern (for example, hexadeca pattern), coupling may occur through metal routing wiring below the pixel, in which case pixel data of ghost pixels adjacent to the bad pixels tend to increase compared to real image information. For example, a pixel in a predetermined direction from the bad pixels may be the ghost pixel, and an adjacent pixel in a direction opposite to the bad pixels from a driving circuit, that is, an input direction of a pixel driving signal, may be the ghost pixel. Referring to FIG. 5, the sub-pixel group on the right side of the bad pixel group 573 may be the candidate pixel group 574 including the ghost pixel.

According to various embodiments, the camera module 330 may perform a bad pixel correction operation 520(or primary correction operation) for the raw image 560. The camera module 330 may generate a primary corrected image by primarily correcting pixel data of each pixel belonging to the bad pixel group 573 in the raw image 560, based on pixel data of at least one pixel located therearound. As the method by which the camera module 330 corrects the pixel data in the bad pixel correction operation 520, at least one of various bad pixel correction (BPC) algorithms may be used.

According to an embodiment, the camera module 330 may correct pixel data, based on pixel data of a plurality of pixels located around a specific pixel of the bad pixel group 573 For example, the camera module 330 may identify pixel data of pixels in a contrast edge direction of pixels around the specific pixel, that is, pixels of the same wavelength as the corresponding pixel (for example, R pixel, G pixel, and B pixel) among neighboring multiple pixels, and correct pixel data of the corresponding pixel by obtaining an average value (or intermediate value) of the identified pixel data. According to an embodiment, the camera module 330 may assign a weight to pixel data of each neighboring pixel according to a distance from the specific pixel. For example, among the neighboring pixels of the specific pixel, a higher weight is assigned in the order of the adjacent pixel, so that the impact on correction may be great.

According to an embodiment, the camera module 330 may correct only pixel data of pixels in the bad pixel group 573 and may not correct pixel data of pixels in the candidate pixel group 574 in the bad pixel correction operation 520. Accordingly, the pixel data of the pixels in the candidate pixel group 574 may be included in the primary corrected data without any change. The pixels in the candidate pixel group 574 may be ghost pixels having pixel data higher than real image information or normal pixels that detect pixel data that is the same as the real image information. When the pixels in the candidate pixel group 574 are not ghost pixels, adjacent pixel data is directly referenced in the bad pixel correction operation 520, and thus it is possible to obtain a more accurate correction value compared to the case where both the bad pixel group 573 and the candidate pixel group 574 are processed as the bad pixels. Further, when the pixels in the candidate pixel group 574 are ghost pixels, the bad pixel group 573 is corrected, based on pixel of the same adjacent channel, and thus there is no great influence during the ghost pixel correction operation 530 and data output from the ghost pixel may be used.

According to various embodiments, the camera module 330 may perform the ghost pixel correction operation 530 (or secondary correction operation) for the primary corrected image acquired by the bad pixel correction operation 520. The camera module 330 may generate the secondary corrected image 580 by correcting pixel data of each pixel belonging to the candidate pixel group 574 in the primary corrected image, based on pixel data of at least one pixel located therearound. Since the pixel data of the bad pixel group 573 has been corrected in the primary corrected image, the pixel data of the bad pixel group 573 corrected during the primary correction may be referenced for correction for the pixel data of the candidate pixel group 574 during the secondary correction.

According to an embodiment, the camera module 330 may perform correction, based on pixel data of a plurality of pixels located around the specific pixel in the candidate pixel group 574 but assign a weight to pixel data of each pixel according to a distance from the specific pixel. For example, the method of correcting specific pixel data in the ghost pixel correction operation 530 may be the same as the bad pixel correction operation 520.

According to an embodiment, the camera module 330 may identify whether corrected data that has been corrected by the ghost pixel correction operation 530 for the specific pixel in the candidate pixel group 574 is within a predetermined range. For example, the predetermined range may be a range of values lower than the less significant bit (LSB) of pixel data of the raw image 560 of the specific pixel and greater than the difference between the LSB of the pixel data of the corresponding pixel and a value obtained by multiplying a sensor gain by a predetermined multiple. More specifically, the predetermined range may be expressed as [Equation 1].

[Equation 1]
$$GPlsb - (sensorGain * 3) < corrected\ data < GPlsb$$

In [Equation 1], GPlsb is lsb of the corresponding pixel. In [Equation 1], three times the sensor gain are considered, but the disclosure is not limited thereto.

According to an embodiment, when the calculated corrected data is within a predetermined range, the camera module 330 may generate the secondary corrected image 580 by using the corrected data. Alternatively, when the calculated corrected data is not within the predetermined range, the camera module 330 may generate the secondary corrected image 580 by directly using the pixel data of the raw image 560 without the use of corrected data. In this case, whether the corrected data is within the predetermined range may be determined for each pixel in the candidate pixel group 574, and when only corrected data of some pixels is within the predetermined range and corrected data of the remaining pixels is not within the predetermined range, based on the calculation result, the secondary corrected image 580 may be generated using only the corrected data of the pixels within the predetermined range.

According to various embodiments, the camera module 330 may output the secondary corrected image 580 generated by the ghost pixel correction operation 530 into the application processor. Referring to FIG. 5, in the secondary corrected image 580, pixel data of the bad pixel group 593 and the candidate pixel group 594 in the raw image 560 may be corrected and thus correspond to pixel data of the real image. Accordingly, even when the candidate pixel group 594 corresponds to an edge area of the image, it is possible to clearly process the edge area by accurately reflecting image information.

FIGS. 6A and 6B illustrate a method of detecting a bad pixel group according to various embodiments.

FIG. 6A illustrates an example of a raw image 660 acquired by an image sensor (for example, the image sensor 340 of FIG. 3) having a hexadeca pattern (for example, the hexadeca pattern 450 of FIG. 4).

Referring to FIG. 6A, in the raw image 660, a G pixel group 670 including 4*4 pixels may be divided into 4 sub-pixel groups, each of which includes 2*2 pixels. Among then, a first sub-pixel group 671 located on the upper left side may include 1 bad pixel, and a third sub-pixel group 673 located on the lower left side may include 4 bad pixels.

According to various embodiments, the camera module may determine that a sub-pixel group including bad pixels larger than or equal to a predetermined number among the respective sub-pixel groups is the bad pixel group. For example, as illustrated in FIG. 6A, when each sub-pixel group is constituted by 2*2 pixels, the third sub-pixel group 673 including 3 or more bad pixels may be determined as the bad pixel group. The number of bad pixels that determines the bad pixel group may vary depending on the number of pixels included in the pixel group or sub-pixel group.

According to an embodiment, the camera module may identify the number of bad pixels belonging to each pixel group. After capturing a test image, the camera module may detect the bad pixel, based on the difference between pixel data of each pixel in the raw image acquired by the image sensor and real data of the test image. Referring to FIG. 6A, in the G pixel group 670, the first sub-pixel group 671 may include 1 bad pixel, the second sub-pixel group 672 may include 0 bad pixels, the third pixel group 673 may include 4 bad pixels, and the fourth sub-pixel group 674 may include 0 bad pixels. The camera module may determine the third sub-pixel group 673 including bad pixels larger than or equal to a predetermined number of 3 as the bad pixel group.

According to various embodiments, the camera module may determine one of the sub-pixel groups adjacent to the bad pixel group as a candidate pixel group. The candidate pixel group may be defined as a sub-pixel group that is likely to include the ghost pixel. The camera module may determine an adjacent sub-pixel group in a direction opposite to an input direction of a pixel driving signal from the bad pixel group as the candidate pixel group. Referring to FIG. 6A, the fourth sub-pixel group 674 disposed on the right side of the third sub-pixel group 673 that is the bad pixel group may be determined as the candidate pixel group.

FIG. 6B illustrates a pixel group including 4*4 pixels in the image sensor having the hexadeca pattern.

According to an embodiment, the image sensor may include a micro lens array including a plurality of micro lenses capable of imaging incident light on a specific pixel. The micro lenses may cover at least one pixel, and may cover 2*2 pixels in the sub-pixel group as illustrated in FIG. 6B.

Referring to FIG. 6B, 3 bad pixels 673b, 673c, and 673d may be detected in the third sub-pixel group 673 located on the lower left side. In this case, the camera module may determine the third sub-pixel group 673 including bad pixels larger than or equal to a predetermined number (for example, 3) as the bad pixel group. Further, the camera module may determine the fourth sub-pixel group 674 adjacent in a predetermined direction (for example, right) from the bad pixel group as the candidate pixel group.

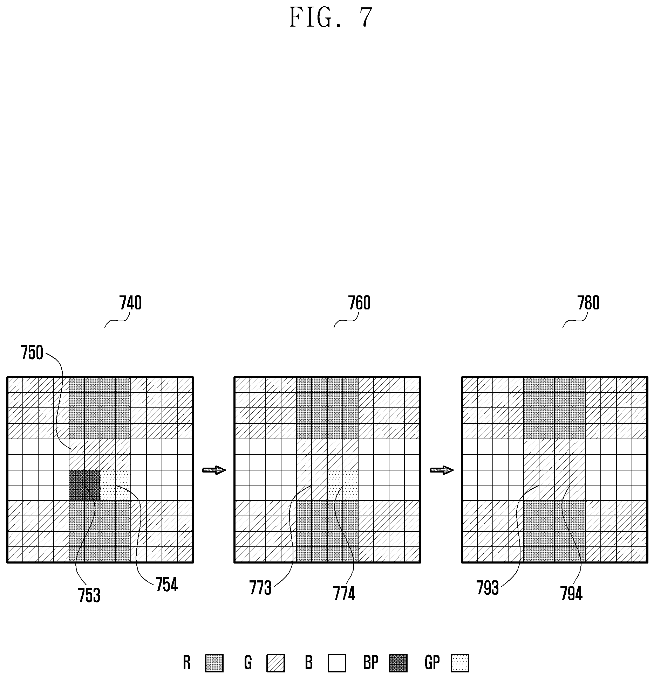

FIG. 7 illustrates a process of sequentially correcting a bad pixel group and a candidate pixel group of the image according to various embodiments.

Referring to FIG. 7, in a raw image 740 (or an input image) acquired by an image sensor (for example, the image sensor 340 of FIG. 3), one sub-pixel group may be a bad pixel group 753 and one sub-pixel group adjacent thereto may be a bad pixel group 754 including a ghost pixel in the G pixel group 750.

According to various embodiments, a camera module (for example, the camera module 330 of FIG. 3) (or the image signal processor 350) may perform a ghost pixel detection operation. According to an embodiment, the camera module may determine a sub-pixel group including bad pixels larger than or equal to the predetermined number (for example, 3) among the respective sub-pixel groups as the bad pixel group.

According to various embodiments, the camera module may perform a bad pixel correction operation (or primary correction operation) for the raw image 740. The camera module may generate the primary corrected image 760 by primarily correcting pixel data of each pixel belonging to the bad pixel group in the raw image 740, based on pixel data of at least one pixel located therearound. As the method by which the camera module corrects the pixel data in the bad pixel correction operation, at least one of various bad pixel correction (BPC) algorithms may be used.

Referring to FIG. 7, in the primary corrected image 760 generated based on the result of the bad pixel correction operation, pixel data of the pixel in the bad pixel group 773 may be corrected, based on neighboring pixels. In the primary corrected image 760, pixel data of pixels in the candidate pixel group 774 may not be corrected and pixel data of the raw image 740 may be included without any change.

According to various embodiments, the camera module may perform the ghost pixel correction operation (or secondary correction operation) for the primary corrected image 760 acquired by the bad pixel correction operation. The camera module may generate the secondary corrected image 780 by correcting pixel data of each pixel belonging to the candidate pixel group in the primary corrected image 760, based on pixel data of at least one pixel located therearound. Since the pixel data of the bad pixel group has been corrected in the primary corrected image 760, the pixel data of the bad pixel group 793 that has been corrected in the primary correction may be referenced for correction of the pixel data of the candidate pixel group 794 during the secondary correction. The method of correcting specific pixel data in the ghost pixel correction operation may be the same as the bad pixel correction operation.

As described above, in the secondary corrected image 780 that has finished the ghost pixel correction operation, pixel data of the ghost pixel belonging to the candidate pixel group 794 may be corrected and thus an image which is substantially the same as the actually captured image may be output.

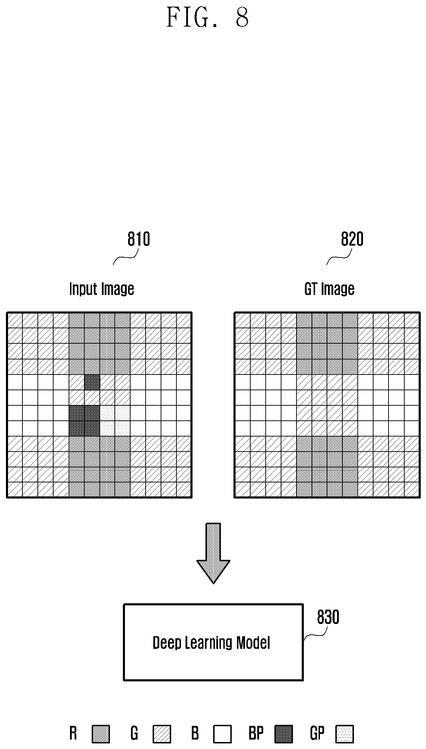

FIG. 8 illustrates an input image 810 input into a deep learning model and a GT image 820 according to various embodiments.

According to an embodiment, a deep learning model 830 may be used for the operation of a bad pixel correction algorithm of the image sensor. For example, an input image including pixel data of the bad pixel and a ground truth (GT) image including real image information including no bad pixel may be input into the deep learning model, and the deep learning model may detect the bad pixel and learn the correction operation of the pixel data of the bad pixel by comparing the pixel data of respective pixels of the input image and the GT image. In the conventional case, when the BPC is processed through deep learning, the bad pixel was included in the input image and learning was performed, and information on the ghost pixel was not used for learning of the deep learning model.

According to various embodiments, in order to detect the bad pixel through deep learning, information on the bad pixel group and the ghost pixel group may be included in the input image 810. For example, an input image including pixel data of the bad pixel and pixel data of the ghost pixel and the GT image including real image information including no bad pixel and no ghost pixel may be input into the deep learning model 830, and the deep learning model may detect the bad pixel and the ghost pixel and learn the correction operation of the pixel data of the bad pixel and the ghost pixel by comparing the pixel data of respective pixels of the input image and the GT image. Since the weight for the ghost pixel becomes lower by adding such a DB into the deep learning model 830, it is possible to improve the image quality compared to the conventional method of processing the bad pixel

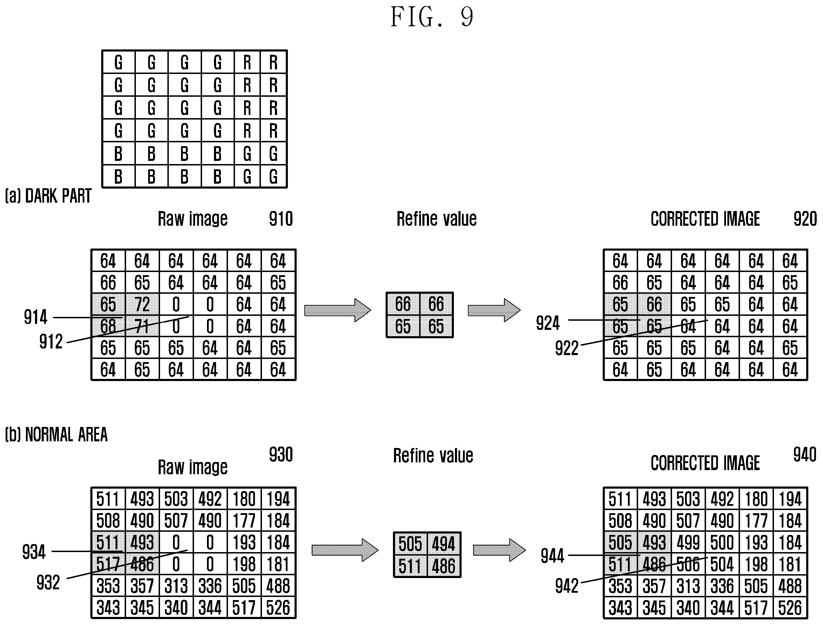

FIG. 9 illustrates a processed raw image and a corrected image according to various embodiments.

FIG. 9 illustrates data corrected a raw image in the case where an input image belongs to a dark part and the case where the input image belongs to a normal area, and 4*4 pixel data located on the upper left side may be G pixels, 4*2 pixel data located on the upper right may be R pixels, 2*4 pixel data located on the lower left side may be B pixels, and 2*2 pixel data located on the lower right side may be G pixels in 6*6 pixel data.

Referring to part (a) of FIG. 9, a sub-pixel group 912 on the lower right side of the G pixel group in the raw image 910 may output 0 and may be detected as a bad pixel group. Further, referring to part (b) of FIG. 9, a sub-pixel group 932 on the lower right of the G pixel group in the raw image 930 may output 0 and may detected as the bad pixel group. In this case, the camera module (or electronic device) may determine sub-pixel groups 914 and 934 located on the left side that is a predetermined location from bad pixel groups 912 and 932 as candidate pixel groups including ghost pixels.

The camera module may primarily correct pixel data of each pixel in the bad pixel groups 912 and 932, based on pixel data of at least one pixel therearound. As the correction result, (65, 65, 64, 64) may be calculated as correction values in the dark area and (499, 500, 506, 504) may be calculated as correction values in the normal area. The camera module may generate primary corrected data by correcting the calculated data as pixel data of the bad pixel group. In the primary corrected data, only pixel data of the bad pixel group may be corrected and pixel data of the raw image may be maintained as pixel data of the candidate pixel group.

The camera module may secondarily correct pixel data of each pixel in the candidate pixel group of the primary corrected image, based on pixel data of at least one pixel therearound. In this case, as pixel data of the bad pixel group, pixel data corrected from the primary corrected image may be used.

Referring to part (a) of FIG. 9, in the dark part, (66, 66, 65, 65) may be calculated as corrected data in the candidate pixel group. In the first pixel, 66 calculated as the corrected data is larger than 65 that is pixel data of the raw image, which does not belong to a predetermined range, and thus the pixel data 65 of the raw image may be included as the first pixel. In second, third, and fourth pixels, corrected data belongs to the predetermined range, and thus the corrected data may be used. Accordingly, corrected data of the candidate pixel group 924 may be calculated as (65, 65, 64, 64) in the secondary corrected image 920. In the secondary corrected image 920, corrected data of the bad pixel group 922 may be the same as the primary corrected image.

Referring to part (b) of FIG. 9, in the normal area, (505, 494, 511, 486) may be calculated as corrected data in the candidate pixel group. Since 494 calculated as corrected data in the second pixel is larger than pixel data 493 of the raw image and 486 calculated as corrected data in the fourth pixel is the same as pixel data of the raw image, the values do not belong to the predetermined range, so that the pixel data of the raw image may be included for the second pixel and the fourth pixel. Since corrected data for the first and third pixels belong to the predetermined range, the corrected data may be used. Accordingly, corrected data of the candidate pixel group 940 may be calculated as (505, 493, 511, 486) in the secondary corrected image 944. In the secondary corrected image 940, the corrected data of the bad pixel group 942 may be the same as the primary corrected image.

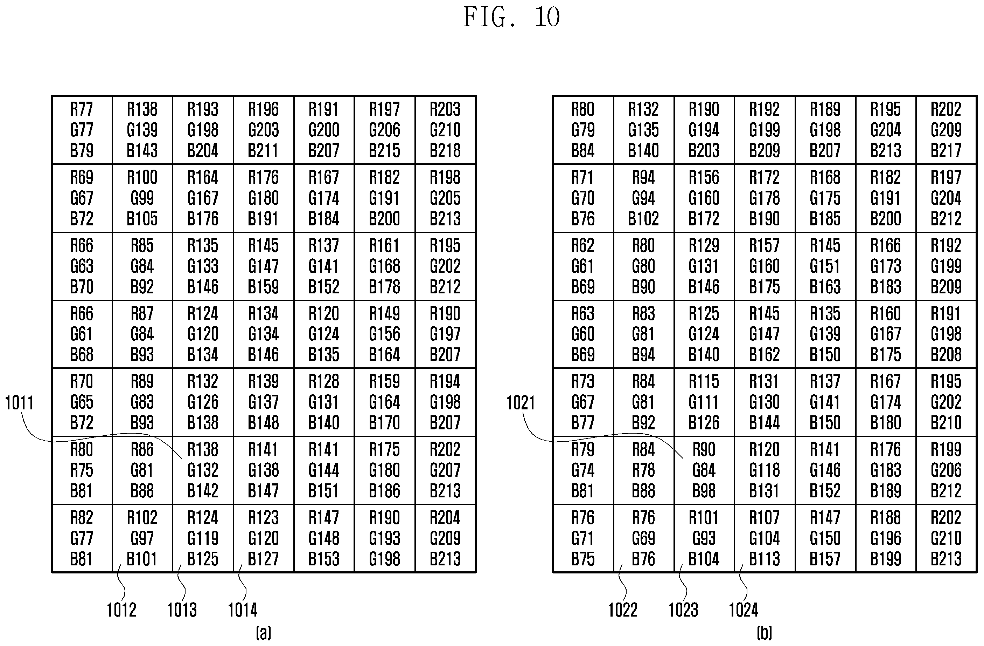

FIG. 10 illustrates examples of a corrected image in the case where a raw image is corrected according to the prior art and the case of correction according to various embodiments of the disclosure. Boxes (for example, 1011 to 1014 and 1021 to 1024) illustrated in FIG. 10 may indicate average values of pixel data of R, G, and B pixels belonging to a pixel group including N*N pixels.

According to various embodiments, an electronic device (for example, the electronic device 300 of FIG. 3) may identify a bad pixel group in a raw image acquired by an image sensor (for example, the image sensor 340 of FIG. 3), correct the pixel data of the pixels belonging to the bad pixel group, based on pixel data of pixels adjacent to the bad pixel group in the raw image to generate a primary corrected image, and correct pixel data of pixels belonging to a candidate pixel group adjacent to the bad pixel group, based on pixel data of pixels adjacent to the candidate pixel group in the primary corrected image to generate a secondary corrected image.

Part (a) of FIG. 10 illustrates a corrected image which has been corrected through processing of the ghost pixel group adjacent to the bad pixel group and pixels of the bad pixel groups in the edge are of the raw image like in the prior art. Referring to part (a) of FIG. 10, pixel data of a first pixel 1011 may be corrected as (138, 132, 142), pixel data of a second pixel 1012 may be corrected as (102, 97, 101), pixel data of a third pixel 1013 may be corrected as (124, 119, 125), and pixel data of a fourth pixel 1014 may be corrected as (123, 120, 127). As described above, when the ghost pixel is processed as the bad pixel to correct the raw image, pixel data may be distorted in the edge area.

Part (b) of FIG. 10 illustrates a secondary corrected image obtained by primarily correcting the bad pixel group and secondarily correcting the candidate pixel group (or ghost pixel group) in the edge area of the raw image according to various embodiments of the disclosure. Referring to part (b) of FIG. 10, pixel data of the first pixel 1021 may be corrected as (90, 84, 98), pixel data of the second pixel 1022 may be corrected as (76, 69, 76), pixel data of the third pixel 1023 may be corrected as (101, 93, 104), and pixel data of the fourth pixel 1024 may be corrected as (107, 104, 113). As described above, when the bad pixels and the ghost pixels are secondarily corrected, other correction values may be calculated in the edge area compared to the case where the ghost pixels are processed as the bad pixels like in the prior art, and the pixels may be corrected as substantially the same pixel data as that in the edge area of the image to be actually captured.

A camera module according to various embodiments of the disclosure may include an image sensor including a plurality of pixels and a processor operatively connected to the image sensor, and the plurality of pixels of the image sensor may include a plurality of pixel groups including a plurality of pixels for detecting light of an identical wavelength band.

According to various embodiments, the processor may be configured to receive a raw image including pixel data corresponding to strength of light detected in each of the plurality of pixels from the image sensor, identify a bad pixel group including at least one bad pixel among a plurality of sub-pixel groups belonging to the pixel group in the received raw image,

generate a primary corrected image by correcting pixel data of respective pixels belonging to the bad pixel group in the raw image, based on pixel data of at least one neighboring pixel, and generate a secondary corrected image by correcting pixel data of respective pixels belonging to one candidate pixel group among a plurality of sub-pixel groups adjacent to the bad pixel group in the primary corrected image, based on pixel data of at least one neighboring pixel.

According to various embodiments, the processor may be configured to correct the pixel data of the respective pixels belonging to the candidate pixel group, based on pixel data of at least one pixel in the bad pixel group having pixel data corrected in the primary corrected image and pixel data of at least one neighboring pixel of which pixel data has not been corrected in the primary corrected image.

According to various embodiments, the processor may be configured to, in case that corrected data of pixel data of a specific pixel in the candidate pixel group is within a predetermined range, generate the secondary corrected image by using the corrected data, and, in case that the corrected data of the pixel data of the specific pixel in the candidate pixel group is not within the predetermined range, generate the secondary corrected image by using the pixel data of the raw image.

According to various embodiments, the processor may be configured to, in case that the corrected data of the pixel data of the specific pixel in the candidate pixel group is smaller than a less significant bit (LSB) of the pixel data of the specific pixel and larger than a difference between the LSB of the pixel data of the specific pixel and a value obtained by multiplying a sensor gain by a predetermined multiple, determine that the corrected data is within the predetermined range.

According to various embodiments, the processor may be configured to determine, as the bad pixel group, a sub-pixel group including bad pixels larger than or equal to a predetermined number among the pixels belonging to the sub-pixel group in the raw image.

According to various embodiments, the candidate pixel group may be a pixel group disposed adjacent in a predetermined direction from the bad pixel group .

According to various embodiments, the candidate pixel group may be a pixel group disposed adjacent in a direction opposite to an input direction of a pixel driving signal from the bad pixel group.

According to various embodiments, pixel data of at least one pixel in the candidate pixel group in the raw image may be higher than real pixel data corresponding to detected light.

According to various embodiments, the processor may be configured to, in case that the primary corrected data is generated, perform correction, based on pixel data of a plurality of pixels located around a specific pixel in the bad pixel group but assign a weight to pixel data of each pixel according to a distance from the specific pixel, and, in case that the secondary corrected data is generated, perform correction, based on pixel data of a plurality of pixels located adjacent to a specific pixel in the candidate pixel group but assign a weight to pixel data of each pixel according to a distance from the specific pixel.

According to various embodiments, the camera module may further include a color filter array disposed in a light incidence direction from the image sensor and configured to allow light of a wavelength band predetermined for each of a plurality of pixels of the image sensor to pass therethrough, and the color filter array may be configured to allow each of the plurality of pixel groups to pass through the predetermined wavelength band

According to various embodiments, the pixel group may include n*n pixels, and the sub-pixel group may include n/2 * n/2 pixels.

A method of correcting an image by a camera module according to various embodiments of the disclosure may include an operation of receiving a raw image including pixel data corresponding to strength of light detected in each of the plurality of pixels from the image sensor of the camera module, an operation of identifying a bad pixel group including at least one bad pixel among a plurality of sub-pixel groups belonging to the pixel group including a plurality of pixels for detecting light of an identical wavelength band in the received raw image, an operation of generating a primary corrected image by correcting pixel data of respective pixels belonging to the bad pixel group in the raw image, based on pixel data of at least one neighboring pixel, and an operation of generating a secondary corrected image by correcting pixel data of respective pixels belonging to one candidate pixel group among a plurality of sub-pixel groups adjacent to the bad pixel group in the primary corrected image, based on pixel data of at least one neighboring pixel.

According to various embodiments, the operation of generating the secondary corrected image may include an operation of correcting the pixel data of the respective pixels belonging to the candidate pixel group, based on pixel data of at least one pixel in the bad pixel group having pixel data corrected in the primary corrected image and pixel data of at least one neighboring pixel of which pixel data has not been corrected in the primary corrected image.

According to various embodiments, the operation of generating the secondary corrected image may include an operation of, in case that corrected data of pixel data of a specific pixel in the candidate pixel group is within a predetermined range, generating the secondary corrected image by using the corrected data and an operation of, in case that the corrected data of the pixel data of the specific pixel in the candidate pixel group is not within the predetermined range, generating the secondary corrected image by using the pixel data of the raw image.

According to various embodiments, in case that the corrected data of the pixel data of the specific pixel in the candidate pixel group is smaller than a less significant bit (LSB) of the pixel data of the specific pixel and larger than a difference between the LSB of the pixel data of the specific pixel and a value obtained by multiplying a sensor gain by a predetermined multiple, it may be determined that the corrected data is within the predetermined range.

According to various embodiments, the operation of identifying the bad pixel group may include an operation of determining, as the bad pixel group, a sub-pixel group including bad pixels larger than or equal to a predetermined number among the pixels belonging to the sub-pixel group in the raw image.

According to various embodiments, the candidate pixel group may be a pixel group disposed adjacent in a predetermined direction from the bad pixel group.

According to various embodiments, pixel data of at least one pixel in the candidate pixel group in the raw image may be higher than real pixel data corresponding to detected light.

According to various embodiments, the camera module may further include a color filter array configured to allow light of a wavelength band predetermined for each of a plurality of pixels of the image sensor to pass therethrough, and the color filter array may be configured to allow each of the plurality of pixel groups to pass through the predetermined wavelength band.

A non-transitory computer-readable recording medium storing instructions causing a camera module, when executed by the camera module, to perform operations of receiving a raw image including pixel data corresponding to strength of light detected in each of the plurality of pixels from the image sensor of the camera module, identifying a bad pixel group including at least one bad pixel among a plurality of sub-pixel groups belonging to the pixel group including a plurality of pixels for detecting light of an identical wavelength band in the received raw image, generating a primary corrected image by correcting pixel data of respective pixels belonging to the bad pixel group in the raw image, based on pixel data of at least one neighboring pixel, and generating a secondary corrected image by correcting pixel data of respective pixels belonging to one candidate pixel group among a plurality of sub-pixel groups adjacent to the bad pixel group in the primary corrected image, based on pixel data of at least one neighboring pixel.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an applicationspecific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g.,

compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1. A camera module comprising:

   an image sensor comprising a plurality of pixels; and
   a processor operatively connected to the image sensor,
   wherein the plurality of pixels of the image sensor includes a plurality of pixel groups including a plurality of pixels for detecting light of an identical wavelength band, and
   wherein the processor is configured to:

   receive a raw image including pixel data corresponding to strength of light detected in each of the plurality of pixels from the image sensor;
   identify a bad pixel group including at least one bad pixel among a plurality of sub-pixel groups belonging to the pixel group in the received raw image;
   generate a primary corrected image by correcting pixel data of respective pixels belonging to the bad pixel group in the raw image, based on pixel data of at least one neighboring pixel; and
   generate a secondary corrected image by correcting pixel data of respective pixels belonging to one candidate pixel group among a plurality of sub-pixel groups adjacent to the bad pixel group in the primary corrected image, based on pixel data of at least one neighboring pixel.

2. The camera module of claim 1, wherein the processor is configured to correct the pixel data of the respective pixels belonging to the candidate pixel group, based on pixel data of at least one pixel in the bad pixel group having pixel data corrected in the primary corrected image and pixel data of at least one neighboring pixel of which pixel data has not been corrected in the primary corrected image.

3. The camera module of claim 1 or 2, wherein the processor is configured to:

   in case that corrected data of pixel data of a specific pixel in the candidate pixel group is within a predetermined range, generate the secondary corrected image by using the corrected data; and
   in case that the corrected data of the pixel data of the specific pixel in the candidate pixel group is not within the predetermined range, generate the secondary corrected image by using the pixel data of the raw image.

4. The camera module of claim 3, wherein the processor is configured to, in case that the corrected data of the pixel data of the specific pixel in the candidate pixel group is smaller than a less significant bit (LSB) of the pixel data of the specific pixel and larger than a difference between the LSB of the pixel data of the specific pixel and a value obtained by multiplying a sensor gain by a predetermined multiple, determine that the corrected data is within the predetermined range.

5. The camera module of one of claims 1 to 4, wherein the processor is configured to determine, as the bad pixel group, a sub-pixel group including bad pixels larger than or equal to a predetermined number among the pixels belonging to the sub-pixel group in the raw image.

6. The camera module of one of claims 1 to 5, wherein the candidate pixel group is a pixel group disposed adjacent in a predetermined direction from the bad pixel group .

7. The camera module of one of claims 1 to 6, wherein the candidate pixel group is a pixel group disposed adjacent in a direction opposite to an input direction of a pixel driving signal from the bad pixel group.

8. The camera module of one of claims 1 to 7, wherein pixel data of at least one pixel in the candidate pixel group in the raw image is higher than real pixel data corresponding to detected light.

9. The camera module of one of claims 1 to 8, wherein the processor is configured to:

in case that the primary corrected data is generated, perform correction, based on pixel data of a plurality of pixels located around a specific pixel in the bad pixel group but assign a weight to pixel data of each pixel according to a distance from the specific pixel; and
in case that the secondary corrected data is generated, perform correction, based on pixel data of a plurality of pixels located adjacent to a specific pixel in the candidate pixel group but assign a weight to pixel data of each pixel according to a distance from the specific pixel.

10. The camera module of one of claims 1 to 9, further comprising a color filter array disposed in a light incidence direction and configured to allow light of a wavelength band predetermined for each of a plurality of pixels of the image sensor to pass therethrough,
wherein the color filter array is configured to allow each of the plurality of pixel groups to pass through the predetermined wavelength band.

11. A method of correcting an image by a camera module, the method comprising:

receiving a raw image including pixel data corresponding to strength of light detected in each of the plurality of pixels from the image sensor of the camera module;
identifying a bad pixel group including at least one bad pixel among a plurality of sub-pixel groups belonging to the pixel group including a plurality of pixels for detecting light of an identical wavelength band in the received raw image;
generating a primary corrected image by correcting pixel data of respective pixels belonging to the bad pixel group in the raw image, based on pixel data of at least one neighboring pixel; and
generating a secondary corrected image by correcting pixel data of respective pixels belonging to one candidate pixel group among a plurality of sub-pixel groups adjacent to the bad pixel group in the primary corrected image, based on pixel data of at least one neighboring pixel.

12. The method of claim 11, wherein the generating of the secondary corrected image comprises correcting the pixel data of the respective pixels belonging to the candidate pixel group, based on pixel data of at least one pixel in the bad pixel group having pixel data corrected in the primary corrected image and pixel data of at least one neighboring pixel of which pixel data has not been corrected in the primary corrected image.

13. The method of claim 11 or 12, wherein the generating of the secondary corrected image comprises:

in case that corrected data of pixel data of a specific pixel in the candidate pixel group is within a predetermined range, generating the secondary corrected image by using the corrected data; and
in case that the corrected data of the pixel data of the specific pixel in the candidate pixel group is not within the predetermined range, generating the secondary corrected image by using the pixel data of the raw image.

14. The method of one of claims 11 to 13, wherein the identifying of the bad pixel group comprises determining, as the bad pixel group, a sub-pixel group including bad pixels larger than or equal to a predetermined number among the pixels belonging to the sub-pixel group in the raw image.

15. A non-transitory computer-readable recording medium storing instructions that, when executed by the camera module, cause the camera module to perform operations of:

receiving a raw image including pixel data corresponding to strength of light detected in each of the plurality of pixels from the image sensor of the camera module;

identifying a bad pixel group including at least one bad pixel among a plurality of sub-pixel groups belonging to the pixel group including a plurality of pixels for detecting light of an identical wavelength band in the received raw image;

generating a primary corrected image by correcting pixel data of respective pixels belonging to the bad pixel group in the raw image, based on pixel data of at least one neighboring pixel; and

generating a secondary corrected image by correcting pixel data of respective pixels belonging to one candidate pixel group among a plurality of sub-pixel groups adjacent to the bad pixel group in the primary corrected image, based on pixel data of at least one neighboring pixel.

# FIG. 1

ELECTRONIC DEVICE 101

- INPUT MODULE 150
- SOUND OUTPUT MODULE 155
- BATTERY 189
- POWER MANAGEMENT MODULE 188
- AUDIO MODULE 170
- HAPTIC MODULE 179

- DISPLAY MODULE 160

- MEMORY 130
  - VOLATILE MEMORY 132
  - NON-VOLATILE MEMORY 134
    - INTERNAL MEMORY 136
    - EXTERNAL MEMORY 138

- PROCESSOR 120
  - MAIN PROCESSOR 121
  - AUXILIARY PROCESSOR 123

- COMMUNICATION MODULE 190
  - WIRELESS COMMUNICATION MODULE 192
  - WIRED COMMUNICATION MODULE 194

- SUBSCRIBER IDENTIFICATION MODULE 196
- ANTENNA MODULE 197

- SENSOR MODULE 176
- CAMERA MODULE 180
- INTERFACE 177
- CONNECTION TERMINAL 178

PROGRAM 140
- APPLICATION 146
- MIDDLEWARE 144
- OPERATING SYSTEM 142

100

SECOND NETWORK 199
FIRST NETWORK 198

ELECTRONIC DEVICE 104
ELECTRONIC DEVICE 102
SERVER 108

EP 4 622 288 A1

...

# FIG. 2

**200**

**180**

## Camera module

**220**

Flash

**210**

Lens assembly

**230**

Image sensor

**240**

Image stabilizer

**250**

Memory

**260**

Image signal processor

# FIG. 3

300

| 330 | 310 | 320 |
|---|---|---|

CAMERA MODULE ⟷ APPLICATION PROCESSOR ⟷ MEMORY

IMAGE SENSOR — 340

IMAGE SIGNAL PROCESSOR — 350

360

DISPLAY

FIG. 4

FIG. 5

EP 4 622 288 A1

340

560

570

510 Ghost Pixel Detection

520 Bad Pixel Correction

530 Ghost Pixel Correction

580

573 574

593 594

R ▨   G ▨   B ▢   BP ▨   GP ▨

# FIG. 6A

660

671

670

673

674

1 0
4 0
BP  SEED

R  G  B  BP  GP

FIG. 6B

# FIG. 7

R ▨  G ▨  B ☐  BP ▰  GP ▨

# FIG. 8

810

Input Image

820

GT Image

Deep Learning Model    830

R ▨    G ▧    B ☐    BP ■    GP ▨

FIG. 9

(a) DARK PART

Raw image 910     Refine value     CORRECTED IMAGE 920

(b) NORMAL AREA

Raw image 930     Refine value     CORRECTED IMAGE 940

EP 4 622 288 A1

FIG. 10

EP 4 622 288 A1

**[a]**

| | | | | | | |
|---|---|---|---|---|---|---|
| R77 G77 B79 | R138 G139 B143 | R193 G198 B204 | R196 G203 B211 | R191 G200 B207 | R197 G206 B215 | R203 G210 B218 |
| R69 G67 B72 | R100 G99 B105 | R164 G167 B176 | R176 G180 B191 | R167 G174 B184 | R182 G191 B200 | R198 G205 B213 |
| R66 G63 B70 | R85 G84 B92 | R135 G133 B146 | R145 G147 B159 | R137 G141 B152 | R161 G168 B178 | R195 G202 B212 |
| R66 G61 B68 | R87 G84 B93 | R124 G120 B134 | R134 G134 B146 | R120 G124 B135 | R149 G156 B164 | R190 G197 B207 |
| R70 G65 B72 | R89 G83 B93 | R132 G126 B138 | R139 G137 B148 | R128 G131 B140 | R159 G164 B170 | R194 G198 B207 |
| R80 R75 B81 | R86 G81 B88 | R138 G132 B142 | R141 G138 B147 | R141 G144 B151 | R175 G180 B186 | R202 G207 B213 |
| R82 G77 B81 | R102 G97 B101 | R124 G119 B125 | R123 G120 B127 | R147 G148 B153 | R190 G193 B198 | R204 G209 B213 |

1011 1012 1013 1014

**[b]**

| | | | | | | |
|---|---|---|---|---|---|---|
| R80 G79 B84 | R132 G135 B140 | R190 G194 B203 | R192 G199 B209 | R189 G198 B207 | R195 G204 B213 | R202 G209 B217 |
| R71 G70 B76 | R94 G94 B102 | R156 G160 B172 | R172 G178 B190 | R168 G175 B185 | R182 G191 B200 | R197 G204 B212 |
| R62 G61 B69 | R80 G80 B90 | R129 G131 B146 | R157 G160 B175 | R145 G151 B163 | R166 G173 B183 | R192 G199 B209 |
| R63 G60 B69 | R83 G81 B94 | R125 G124 B140 | R145 G147 B162 | R135 G139 B150 | R160 G167 B175 | R191 G198 B208 |
| R73 G67 B77 | R84 G81 B92 | R115 G111 B126 | R131 G130 B144 | R137 G141 B150 | R167 G174 B180 | R195 G202 B210 |
| R79 G74 B81 | R84 R78 B88 | R90 G84 B98 | R120 G118 B131 | R141 G146 B152 | R176 G183 B189 | R199 G206 B212 |
| R76 G71 B75 | R76 G69 B76 | R101 G93 B104 | R107 G104 B113 | R147 G150 B157 | R188 G196 B199 | R202 G210 B213 |

1021 1022 1023 1024

## INTERNATIONAL SEARCH REPORT

| International application No. |
|---|
| **PCT/KR2024/000993** |

**A. CLASSIFICATION OF SUBJECT MATTER**

**H04N 25/68**(2023.01)i; **H04N 25/11**(2023.01)i; **H04N 23/54**(2023.01)i; **H04N 25/683**(2023.01)i

According to International Patent Classification (IPC) or to both national classification and IPC

**B. FIELDS SEARCHED**

Minimum documentation searched (classification system followed by classification symbols)

H04N 25/68(2023.01); G06T 5/00(2006.01); G09G 3/32(2006.01); H04N 17/00(2006.01); H04N 19/103(2014.01); H04N 19/86(2014.01); H04N 5/217(2011.01); H04N 5/335(2011.01); H04N 5/367(2011.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 로 이미지(raw image), 배드 픽셀(bad pixel), 보상(compensation), 그룹(group), 빛 (light)

**C. DOCUMENTS CONSIDERED TO BE RELEVANT**

| Category* | Citation of document, with indication, where appropriate, of the relevant passages | Relevant to claim No. |
|---|---|---|
| X | KR 10-2022-0009843 A (SAMSUNG ELECTRONICS CO., LTD.) 25 January 2022 (2022-01-25) See paragraphs [0012]-[0051], [0075], [0082] and [0101]; and claims 2, 8 and 10. | 1-7,10-15 |
| Y | | 8-9 |
| Y | KR 10-2018-0080180 A (GUANGDONG OPPO MOBILE TELECOMMUNICATIONS CORP., LTD.) 11 July 2018 (2018-07-11) See claim 1. | 8-9 |
| A | KR 10-2017-0081049 A (LG DISPLAY CO., LTD.) 11 July 2017 (2017-07-11) See paragraphs [0034]-[0083]; claims 1-6; and figures 1-6. | 1-15 |
| A | KR 10-2012-0051372 A (SK HYNIX INC.) 22 May 2012 (2012-05-22) See paragraphs [0031]-[0079]; claims 1-11; and figures 1a-7. | 1-15 |

✓ Further documents are listed in the continuation of Box C.  ✓ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 April 2024** | **24 April 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/000993** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 105430385 A (SHANGHAI FULLHAN MICROELECTRONICS CO., LTD.) 23 March 2016 (2016-03-23)<br>See paragraphs [0079]-[0121]; claims 1-6; and figures 1a-6. | 1-15 |

Form PCT/ISA/210 (second sheet) (July 2022)

**INTERNATIONAL SEARCH REPORT**
Information on patent family members

International application No.

**PCT/KR2024/000993**

| Patent document cited in search report | | | Publication date (day/month/year) | Patent family member(s) | | | Publication date (day/month/year) |
|---|---|---|---|---|---|---|---|
| KR | 10-2022-0009843 | A | 25 January 2022 | CN | 113949879 | A | 18 January 2022 |
| | | | | JP | 2022-019647 | A | 27 January 2022 |
| | | | | US | 11823417 | B2 | 21 November 2023 |
| | | | | US | 2022-0020179 | A1 | 20 January 2022 |
| KR | 10-2018-0080180 | A | 11 July 2018 | CN | 107637068 | A | 26 January 2018 |
| | | | | CN | 107637068 | B | 25 October 2019 |
| | | | | EP | 3331237 | A1 | 06 June 2018 |
| | | | | EP | 3331237 | B1 | 23 October 2019 |
| | | | | JP | 2019-507361 | A | 14 March 2019 |
| | | | | JP | 6461430 | B1 | 30 January 2019 |
| | | | | KR | 10-2049681 | B1 | 27 November 2019 |
| | | | | US | 10438330 | B2 | 08 October 2019 |
| | | | | US | 2018-0150942 | A1 | 31 May 2018 |
| | | | | WO | 2018-098707 | A1 | 07 June 2018 |
| KR | 10-2017-0081049 | A | 11 July 2017 | KR | 10-2615886 | B1 | 20 December 2023 |
| KR | 10-2012-0051372 | A | 22 May 2012 | KR | 10-1243363 | B1 | 13 March 2013 |
| | | | | US | 2012-0133804 | A1 | 31 May 2012 |
| CN | 105430385 | A | 23 March 2016 | CN | 105430385 | B | 30 June 2017 |

Form PCT/ISA/210 (patent family annex) (July 2022)